# EUROPEAN PATENT SPECIFICATION

(11) **EP 3 388 283 B1**
(45) Date of publication and mention of the grant of the patent: **02.12.2020**
(21) Application number: 18166924.3
(22) Date of filing: 12.04.2018
(51) Int. Cl.: B60P 1/02

(54) **LIFTING SYSTEM, AS WELL AS VEHICLE PROVIDED WITH THE LIFTING SYSTEM**
HEBESYSTEM, SOWIE FAHRZEUG MIT DEM HEBESYSTEM
SYSTEME DE LEVAGE, AINSI QUE VEHICULE EQUIPE DU SYSTEME DE LEVAGE

(30) Priority: 12.04.2017 NL 2018698
(43) Date of publication of application: 17.10.2018
(73) Proprietor: Bink, Henk, 3640 Kessenich-Kinrooi (BE); Bink, Phia, 3640 Kessenich-Kinrooi (BE)
(72) Inventor: BINK, Henk, 3640 Kessenich-Kinrooi (BE)
(74) Representative: Verhees, Godefridus Josephus Maria

(56) References cited:
- US-A- 2 990 966
- US-A- 5 810 544
- US-A1- 2009 295 124
- US-A1- 2012 020 762

## Description

### Technical field of the invention

The invention relates to a vehicle, in particular a trailer, having two wheels each of which being rotatable about a wheel axle, which trailer being provided with a lifting system, comprising:
- a supporting frame for carrying a load to be lifted, which supporting frame is provided with a first end and a second end,
- two parallel levers one on each side of the support frame and each having a first end and a second end, the first end of each levers being pivotally connected to the first end of the support frame,
- two rotary shafts being in line, wherein the levers are rotatable about the rotary shafts and on either side of the supporting frame between the ends of the levers the shafts are connected to the levers, the rotary shafts being formed by the wheel axles (9),
- an auxiliary frame connected to the second end of the supporting frame,
- displacement means for displacing the second end of the levers in the vertical direction, which displacement means are present on the auxiliary frame and are connected to the second ends of the levers, which displacement means comprise an elongate, rigid displacement element which extends upwards from the auxiliary frame and which is movably connected to the auxiliary frame, and
- two connecting elements, an end of each connecting element being pivotable about a first pivot shaft parallel to the rotary shafts, and being connected to the front end of the supporting frame, and the other end of each connecting element being pivotable about a second pivot axis parallel to the rotary shafts, and being connected to the auxiliary frame,
- two further connecting elements (33; 34), an end (33B; 34B) of each connecting element being pivotable about a third pivot axis (45) parallel to the rotary shafts, and being connected to the levers (15) or to the front end (3B) of the support frame, and the other end (33A; 34A) of each connecting element being pivotable about a fourth pivot axis (47) parallel to the rotary shafts, and being connected to the auxiliary frame (11).

### Background of the invention

A trailer according to the preamble of claim 1 is known from US2012/020762A. In this trailer the supporting frame is connected to the auxiliary frame via two parallel pairs of each two parallel connecting elements. The connecting elements of one of these pairs serve as a levers. US 2012/020762 A1 discloses the preamble of claim 1.

### Summary of the invention

An object of the invention is to improve the known trailer. To this end, the lifting system according to the invention is characterized in that the rotary shafts are formed by the wheel axles and in that an end of each further connecting element 1 is connected to the levers or to the front end of the support frame, and the other end of each further connecting element is connected to the auxiliary frame.

From US5810544A a trailer is known comprising displacement means having a cable and a winding shaft on which the cable can be wound up and unwound. This cable is connected via diverting wheels to the second ends of the levers. By winding and unwinding the cable, the second end of the levers is moved up and down, with the supporting frame being lifted or lowered. Displacement means with a cable guided by deflection wheels are susceptible to interference. The cable can run off during use of the deflection wheels and the bearings of the deflection wheels and the cable are subject to wear.

An embodiment of the lifting system according to the invention is characterized in that the connecting elements and further connecting elements being parallel to each other and remaining parallel to each other during the displacement of the second end of the levers. By using a parallelogram construction, the position of the auxiliary frame can remain unchanged during the lowering and raising of the supporting frame. This is favorable if the auxiliary frame is connected to a pulling vehicle.

A further embodiment of the vehicle according to the invention is characterized in that the lifting system comprises an auxiliary element which is connected to the second ends of the levers and extends upwards from the levers, the displacement means on the auxiliary frame are connected to an upper end of the auxiliary element. Due to the presence of the auxiliary element, the displacement means can be connected directly to the auxiliary element. If the displacement means comprise a cable present on a winding shaft, the cable can be connected directly to the auxiliary element from the winding shaft and the cable need not be guided through deflecting wheels. Since the movement means can be connected directly to the auxiliary element, a reliable construction has been obtained.

In an advantageous embodiment of the vehicle according to the invention, the elongated displacement element is formed by a threaded spindle and the lifting element is provided with internal screw thread and is movable along the threaded spindle.

In another advantageous embodiment of the vehicle according to the invention, the elongate displacement element is formed by a cylinder or piston of a cylinder-piston combination, an end of each cylinder-piston combination is connected to the auxiliary frame and the other end of each cylinder-piston combination is connected to the upper end of the auxiliary element.

Yet another advantageous embodiment of the vehicle according to the invention is characterized in that the lifting system comprises two guides attached to the auxiliary frame, one on each side of the auxiliary frame, which guides are substantially parallel to the threaded spindle, and that each lever is provided with a guide element that is movable in one of the guides.

Preferably, the lifting system has two further guides attached to the auxiliary frame, one on each side of the auxiliary frame, which further guides are at least substantially parallel to and spaced from the guides, and that each lever is provided with a further guiding element which is movable in one of the further guides.

Preferably, a drawbar is attached to the auxiliary frame for coupling to a towing vehicle.

### Brief description of the drawings

The invention will be further elucidated below on the basis of drawings. These drawings show embodiments of the vehicle according to the present invention. In the drawings:
Figure 1 shows a trailer in side view provided with a first embodiment of the lifting system according to the invention, with the supporting frame in the uppermost position at a distance from the ground;
Figure 2 shows the trailer shown in Figure 1 in side view with the supporting frame in the lowest position on the ground;
Figure 3 shows the front part of the trailer shown in Figure 1 in perspective with the supporting frame in the lowest position;
Figure 4 shows a trailer in side view provided with a second embodiment of the lifting system according to the invention;
Figure 5 shows the trailer shown in Figure 4 in side view with the supporting frame in the lowest position on the ground;
Figure 6 shows a trailer in side view provided with a third embodiment of the lifting system according to the invention with the supporting frame in the uppermost position at a distance from the ground;
Figure 7 shows the position of the trailer shown in Figure 6 in perspective;
Figure 8 shows the trailer shown in Figure 6 in side view with the supporting frame in the lowest position on the ground; and
Figure 9 shows the position of the trailer shown in Figure 8 in perspective.

### Detailed description of the drawings

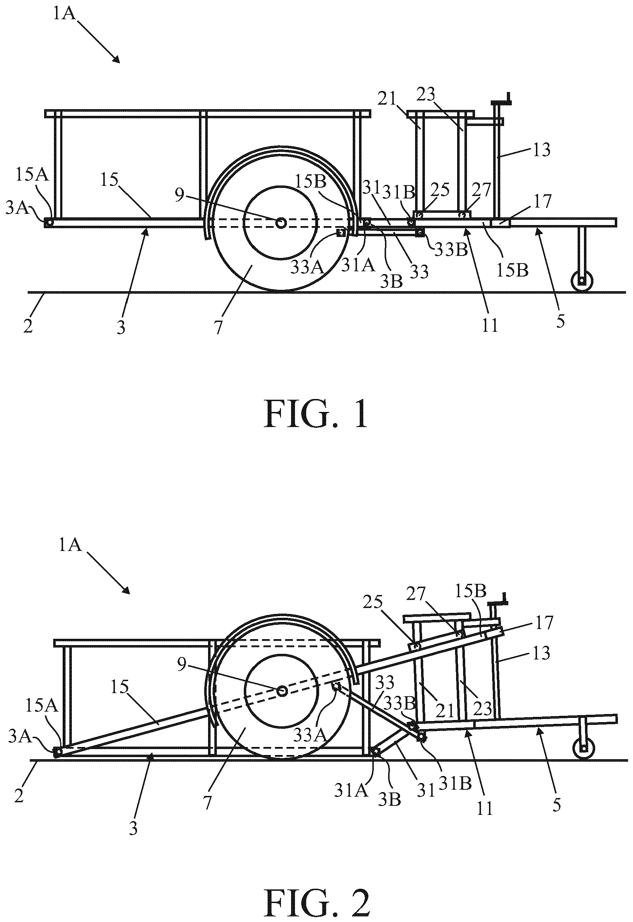

In figures 1 and 2 a trailer 1A provided with a first embodiment of the lifting system according to the invention is shown in side view with the supporting frame in the uppermost position at a distance from the ground 2 and in the lowest position on the ground 2, respectively. On the supporting frame 3 a fixed or detachable bottom plate can be mounted. The bottom plate may be provided with wheels so that it can be moved. The supporting frame is U-shaped, the open side being located at a first end 3A (rear end) of the supporting frame facing away from a pulling vehicle, so that the bottom plate can be driven out of the supporting frame. The bottom plate is located with the side edges on the supporting frame. In the lowered position of the supporting frame the wheels of the bottom plate are on the ground and the bottom plate is separate from the supporting frame.

The trailer further has an auxiliary frame 11 which is hingedly connected to a second end 3B (front end) of the supporting frame 3, as well as a drawbar 5 which is attached to the auxiliary frame. This auxiliary frame is part of a lifting system for lowering the supporting frame on the ground and lifting from the ground. The lifting system further has two parallel levers 15, one on each side of the supporting frame. These levers are each with a first end 15A pivotally connected to the first end 3A of the supporting frame and are with the other, second end 15B connected to a lifting element 17. This lifting element 17 is displaced in the vertical direction by displacement means 10. These displacing means have an elongate, rigid displacement element formed by a threaded spindle 13. The lifting element 17 is provided with internal screw thread and is movable along the rotatable threaded spindle 13, which is present at least substantially at right angles to the drawbar 5. The wheel axles 9 of the wheels 7 of the trailer are fastened to the levers 15 at a location between the ends 15A and 15B of the levers.

Two parallel guides 21 and 23 are provided on each side of the auxiliary frame 11. These guides are substantially parallel to the threaded spindle 13. Two guide elements 25 and 27 present on each lever 15 are movable in the guides.

On each side of the supporting frame the auxiliary frame 11 is connected to the supporting frame via two connecting elements 31 and 33. An end 31A of one of the connecting elements 31 is pivotable about a first pivot shaft 41, parallel to the wheel axles 9, and is connected to the front end 3B of the supporting frame. The other end 31B is pivotable about a second pivot axis 43 parallel to the wheel axles, and is connected to the auxiliary frame 11. One end 33B of the other connecting element 33 is pivotally connected to the levers about a third pivot shaft 45 parallel to the wheel axles 9, and the other end 33A is pivotable about a fourth pivot axis 47 parallel to the wheel axles, and is connected to the auxiliary frame 11.

The auxiliary frame 11 is connected to the supporting frame in such a manner that the guides 21 and 23 remain at right angles to the levers 15 when the lifting element 17 is moved along the threaded spindle 13.

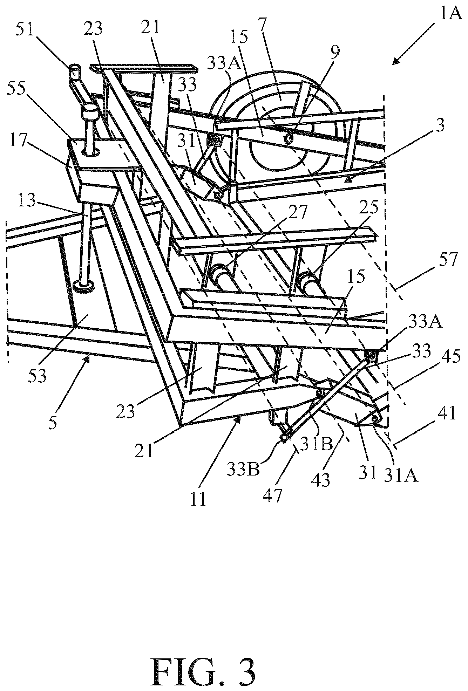

For clarity, in Figure 3 the front part of the trailer 1A is shown in perspective with the supporting frame 11 in the lower position. A crank 51 is attached to the upper end of the threaded spindle 13. The threaded spindle is mounted with the lower end on a strip 53 which is attached to the drawbar and is mounted near the upper end in a further strip 55 attached to the auxiliary frame 11. The pivot axes 41-45 are parallel to an imaginary axis 57 through the wheel axles 9.

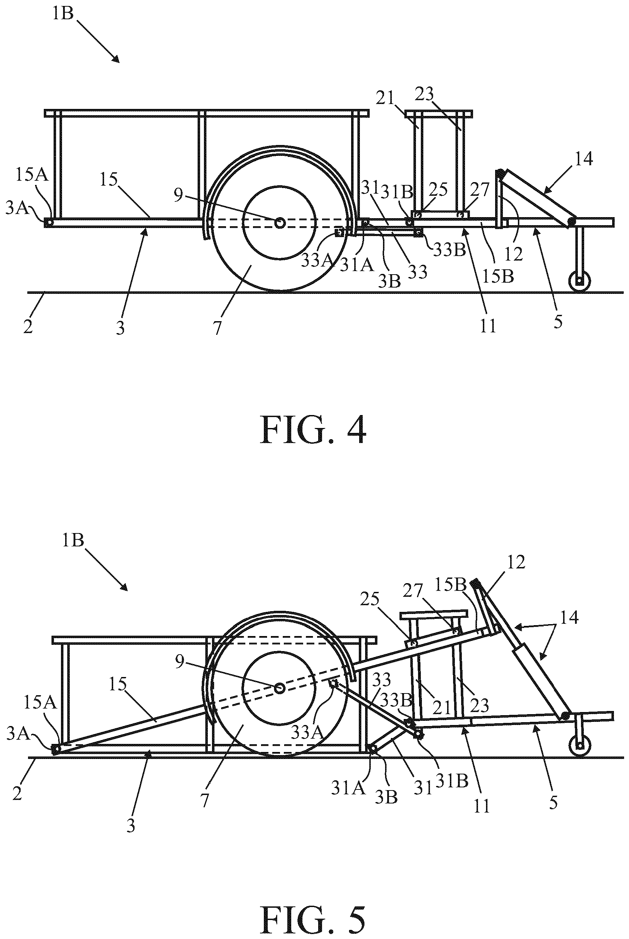

Figures 4 and 5 show a trailer 1B provided with a second embodiment of the lifting system according to the invention in side view. All parts that are equal to or fulfill the same function as those of the first embodiment are indicated by the same reference numerals. Here, the elongated displacement element is formed by a cylinder or piston of a cylinder-piston combination 14 which with one end is connected to the auxiliary frame 11 and with the other end is connected to an auxiliary element 12 which is attached to the levers 15 at the location of the second ends 15B.

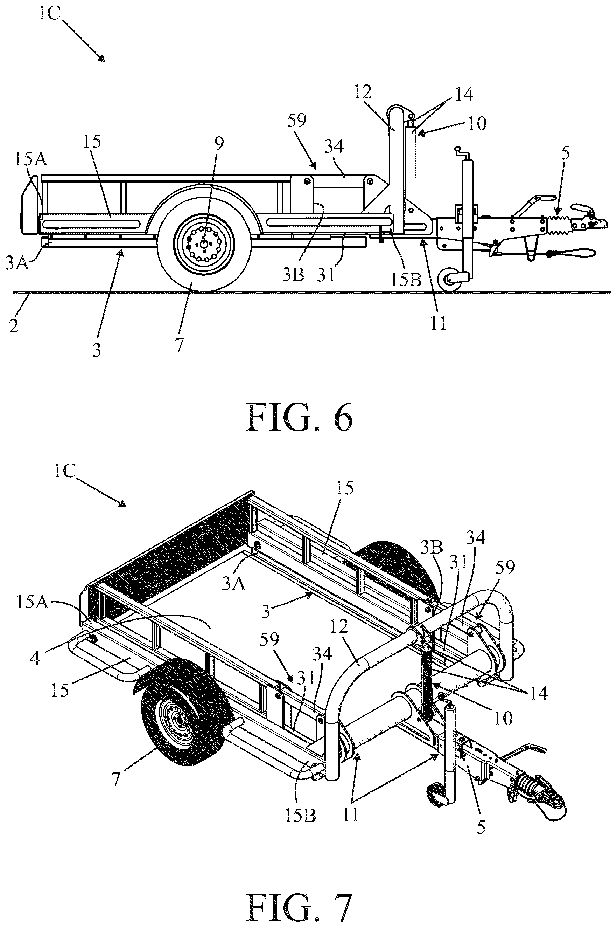

Figures 6-9 show a trailer 1C provided with a third embodiment of the lifting system according to the invention. Here the auxiliary frame 11 is connected to the supporting frame via two parallelogram constructions 59 and an auxiliary element 12 is also attached to the levers 15 at the location of the second ends 15B of the levers. The elongate displacement element is here also formed by a cylinder or piston of a cylinder-piston combination 14 which is connected with one end to the auxiliary frame 11 and with the other end to the auxiliary element 12.

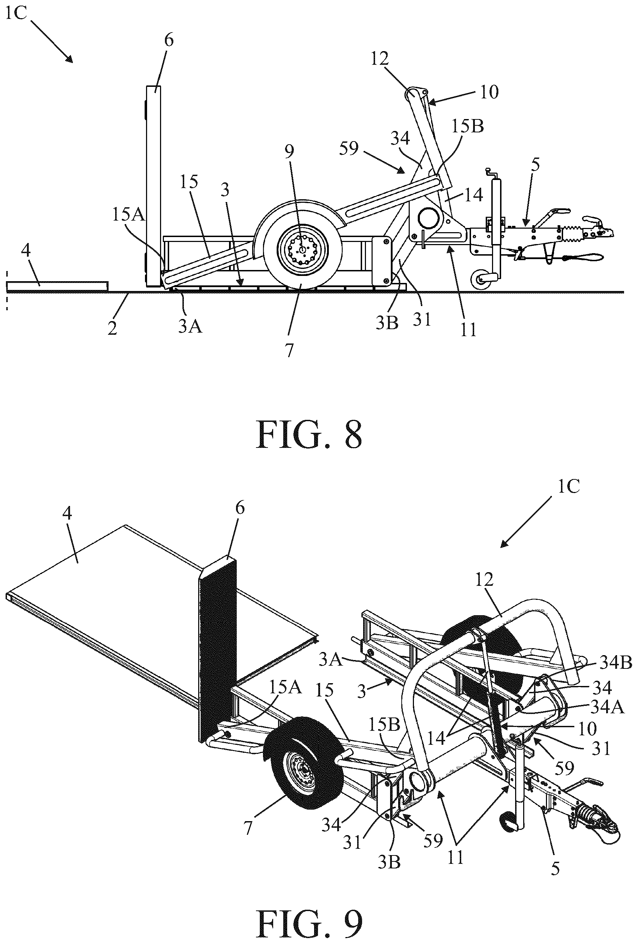

The parallelogram constructions 59 each have two connecting elements 31 and 34 which are parallel to each other. One end 33A, 34A of each connecting element is pivotally connected to the supporting frame 3 and the other end 33B, 34B of each connecting element is pivotally connected to the auxiliary frame 11. Figures 6 and 7 show the trailer 1C with the supporting frame 3 in the uppermost position at a distance from the ground 2 and in Figures 8 and 9 the trailer is shown with the supporting frame 3 in the lowest position on the ground 2 and with the bottom plate 4 separate from the supporting frame. Hereby, the tailgate 6 of the trailer is rotated away so that the bottom plate can be extended.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims. The bottom plate can thus also be fixedly attached to the supporting frame instead of the detachable embodiment shown here. The vehicle can also be designed as a vehicle provided with drive and steering instead of as a trailer.

## Claims

1. A vehicle (1A; 1B; 1C), in particular a trailer, having two wheels (7) each of which being rotatable about a wheel axle (9), which trailer being provided with a lifting system, comprising:
- a supporting frame (3) for carrying a load to be lifted, which supporting frame is provided with a first end (3A) and a second end (3B),
- two parallel levers (15) one on each side of the support frame and each having a first end (15A) and a second end (15B), the first end (15A) of each levers being pivotally connected to the first end (3A) of the support frame,
- two rotary shafts being in line, wherein the levers are rotatable about the rotary shafts and on either side of the supporting frame between the ends (15A, 15B) of the levers the shafts are connected to the levers (15),
- an auxiliary frame (11) connected to the second end (3B) of the supporting frame (3),
- displacement means (10) for displacing the second end (15B) of the levers in the vertical direction, which displacement means are present on the auxiliary frame (11) and are connected to the second ends (15B) of the levers, which displacement means (10) comprise an elongate, rigid displacement element which extends upwards from the auxiliary frame (11) and which is movably connected to the auxiliary frame,
- two connecting elements (31), an end (31A) of each connecting element being pivotable about a first pivot shaft (41) parallel to the rotary shafts, and being connected to the front end (3B) of the supporting frame, and the other end (31B) of each connecting element being pivotable about a second pivot axis (43) parallel to the rotary shafts, and being connected to the auxiliary frame (11), and
- two further connecting elements (33; 34), an end (33B, 34B) of each further connecting element (33; 34) being pivotable about a third pivot axis (45) parallel to the rotary shafts, and the other end (33A; 34A) of each further connecting element (33; 34) being pivotable about a fourth pivot axis (47) parallel to the rotary shafts,
**characterized in that** the rotary shafts are formed by the wheel axles (9) and **in that** an end (33B; 34B) of each further connecting element is connected to the levers (15) or to the front end (3B) of the support frame, and the other end (33A; 34A) of each further connecting element is connected to the auxiliary frame (11).

2. The vehicle (1C) according to claim 1, **characterized in that** the connecting elements (31) and further connecting elements (34) being parallel to each other and remaining parallel to each other during the displacement of the second end (15B) of the levers (15).

3. The vehicle (1A; 1B) according to claim 1 or 2, **characterized in that** the lifting system comprises an auxiliary element (12) which is connected to the second ends (15B) of the levers (15) and extends upwards from the levers, the displacement means (10) on the auxiliary frame are connected to an upper end (12A) of the auxiliary element.

4. The vehicle (1A) according to claim 3, **characterized in that** the elongated displacement element is formed by a threaded spindle (13) and the displacing means (10) further comprise a lifting element (17) which is connected to the upper end of the auxiliary element (12) and is provided with internal thread and can be moved along the threaded spindle.

5. The vehicle (1B; 1C) according to claim 3, **characterized in that** the elongate displacement element is formed by a cylinder or piston of a cylinder-piston combination (14), an end of each cylinder-piston combination is connected to the auxiliary frame (11) and the other end of each cylinder-piston combination is connected to the upper end of the auxiliary element (12).

6. The vehicle (1A) according to claim 4, **characterized in that** the lifting system comprises two guides (21) attached to the auxiliary frame (11), one on each side of the auxiliary frame, which guides are substantially parallel to the threaded spindle. (13), and that each lever (15) is provided with a guide element (25) which is movable in one of the guides.

7. The vehicle (1A) according to claim 6, **characterized in that** the lifting system comprises two further guides (23) attached to the auxiliary frame (11), one on each side of the auxiliary frame, which further guides are at least substantially parallel to and on distance from the guides (21), and that each lever (15) is provided with a further guide element (27) which is movable in one of the further guides.

8. The vehicle (1A; 1B; 1C) according to one of the preceding claims, **characterized in that** a drawbar (5) is attached to the auxiliary frame (11) for coupling to a towing vehicle.

## Patentansprüche

1. Fahrzeug (1A; 1B; 1C), insbesondere ein Anhänger mit zwei Rädern (7), von denen jedes um eine Radachse (9) drehbar ist, wobei der Anhänger mit einem Hebesystem versehen ist, umfassend:
- einen Stützrahmen (3) zum Tragen einer anzuhebenden Last, wobei der Stützrahmen mit einem ersten Ende (3A) und einem zweiten Ende (3B) versehen ist;
- zwei parallele Hebel (15), einer auf jeder Seite des Stützrahmens und jeweils mit einem ersten Ende (15A) und einem zweiten Ende (15B), wobei das erste Ende (15A) jedes Hebels schwenkbar mit dem ersten Ende (3A) des Tragrahmens verbunden ist,
- zwei rotierende Wellen in einer Linie, wobei die Hebel um die rotierenden Wellen drehbar sind und auf beiden Seiten des Stützrahmens zwischen den Enden (15A, 15B) der Hebel die Wellen mit den Hebeln (15) verbunden sind,
- einen Hilfsrahmen (11), der mit dem zweiten Ende (3B) des Stützrahmens (3) verbunden ist,
- Verschiebungsmittel (10) zum Verschieben des zweiten Endes (15B) der Hebel in vertikaler Richtung, wobei die Verschiebungsmittel auf dem Hilfsrahmen (11) vorhanden sind und mit den zweiten Enden (15B) der Hebel verbunden sind, wobei die sich verschieben Mittel (10) ein längliches, starres Verschiebungselement umfassen, das sich vom Hilfsrahmen (11) nach oben erstreckt und beweglich mit dem Hilfsrahmen verbunden ist,
- zwei Verbindungselemente (31), wobei ein Ende (31A) jedes Verbindungselements um eine erste Schwenkwelle (41) parallel zu den Drehwellen schwenkbar ist und mit dem vorderen Ende (3B) des Tragrahmens verbunden ist, und das andere Ende (31B) jedes Verbindungselements um eine zweite Schwenkachse (43) parallel zu den Drehwellen schwenkbar und mit dem Hilfsrahmen (11) verbunden ist, und
- zwei weitere Verbindungselemente (33; 34), wobei ein Ende (33B; 34B) jedes Verbindungselements um eine dritte Schwenkachse (45) parallel zu den Drehwellen schwenkbar ist, und das andere Ende (33A; 34A) jeder Verbindung Element, das um eine vierte Schwenkachse (47) parallel zu den Drehwellen schwenkbar ist,
**dadurch gekennzeichnet, dass** die Drehwellen durch die Radachsen (9) gebildet werden und dass ein Ende (33B; 34B) jedes weiteren Verbindungselements mit den Hebeln (15) oder dem vorderen Ende (3B) des Tragrahmens verbunden ist und das andere Ende (33A; 34A) jedes weiteren Verbindungselements mit dem Hilfsrahmen (11) verbunden ist.

2. Fahrzeug (1C) nach Anspruch 1, **dadurch gekennzeichnet, dass** die Verbindungselemente (31) und weitere Verbindungselemente (34) parallel zueinander sind und parallel zueinander bleiben während der Verschiebung des zweiten Endes (15B) der Hebel (15).

3. Fahrzeug (1A; 1B) nach Anspruch 1 oder 2, **dadurch gekennzeichnet, dass** das Hebesystem ein Hilfselement (12) umfasst, das mit den zweiten Enden (15B) der Hebel (15) verbunden ist und sich von der Hebel nach oben erstreckt, wobei die Verschiebemittel (10) am Hilfsrahmen mit einem oberen Ende (12A) des Hilfselements verbunden sind.

4. Fahrzeug (1A) nach Anspruch 3, **dadurch gekennzeichnet, dass** das längliche Verdrängungselement durch eine Gewindespindel (13) ausgebildet ist und die Verdrängungsmittel (10) ferner ein Hubelement (17) umfassen, das mit dem oberen Ende des Hilfselements (12) verbunden ist und mit Innengewinde versehen ist und entlang der Gewindespindel bewegt werden kann.

5. Fahrzeug (1B; 1C) nach Anspruch 3, **dadurch gekennzeichnet, dass** das längliche Verschiebungselement durch einen Zylinder oder Kolben einer Zylinder-Kolben-Kombination (14) gebildet ist, wobei ein Ende jeder Zylinder-Kolben-Kombination mit der Hilfsrahmen (11) verbunden ist und das andere Ende jeder Zylinder-Kolben-Kombination mit dem oberen Ende des Hilfselements (12) verbunden ist.

6. Fahrzeug (1A) nach Anspruch 4, **dadurch gekennzeichnet, dass** das Hebesystem zwei Führungen (21) umfasst, die an dem Hilfsrahmen (11) angebracht sind, eine auf jeder Seite des Hilfsrahmens, wobei die Führungen im Wesentlichen parallel zum Gewindespindel (13) sind und dass jeder Hebel (15) mit einem Führungselement (25) versehen ist, das in einer der Führungen beweglich ist.

7. Fahrzeug (1A) nach Anspruch 6, **dadurch gekennzeichnet, dass** das Hebesystem zwei weitere Führungen (23) umfasst, die an dem Hilfsrahmen (11) angebracht sind, eine auf jeder Seite des Hilfsrahmens, wobei weitere Führungen zumindest im Wesentlichen parallel zu und auf Abstand von den Führungen (21) sind, und dass jeder Hebel (15) mit einem weiteren Führungselement (27) versehen ist, das in einer der weiteren Führungen beweglich ist.

8. Fahrzeug (1A; 1B; 1C) nach einem der vorhergehenden Ansprüche, **gekennzeichnet dadurch, dass** eine Deichsel (5) an dem Hilfsrahmen (11) zur Kupplung an ein Zugfahrzeug angebracht ist.

## Revendications

1. Véhicule (1A; 1B; 1C), en particulier une remorque, ayant deux roues (7) dont chacune peut tourner autour d'un essieu de roue (9), cette remorque étant équipée d'un système de levage, comprenant:
- un châssis de support (3) pour porter une charge à soulever, lequel châssis de support est pourvu d'une première extrémité (3A) et d'une seconde extrémité (3B),
- deux leviers parallèles (15) un de chaque côté du bâti de support et comportant chacun une première extrémité (15A) et une deuxième extrémité (15B), la première extrémité (15A) de chaque leviers étant reliée de manière pivotante à la première extrémité (3A)) du cadre de support,
- deux arbres rotatifs étant en ligne, les leviers pouvant tourner autour des arbres rotatifs et de part et d'autre du bâti de support entre les extrémités (15A, 15B) des leviers les arbres sont reliés aux leviers (15),
- un cadre auxiliaire (11) relié à la deuxième extrémité (3B) du cadre de support (3),
- des moyens de déplacement (10) pour déplacer la deuxième extrémité (15B) des leviers dans le sens vertical, lesquels moyens de déplacement sont présents sur le bâti auxiliaire (11) et sont reliés aux secondes extrémités (15B) des leviers, ce déplacement les moyens (10) comprennent un élément de déplacement rigide allongé qui s'étend vers le haut depuis le châssis auxiliaire (11) et qui est relié de manière mobile au châssis auxiliaire,
- deux éléments de liaison (31), une extrémité (31A) de chaque élément de liaison pouvant pivoter autour d'un premier arbre de pivotement (41) parallèle aux arbres rotatifs, et étant reliée à l'extrémité avant (3B) du châssis de support, et le l'autre extrémité (31B) de chaque élément de connexion pouvant pivoter autour d'un deuxième axe de pivotement (43) parallèle aux arbres rotatifs, et étant reliée au châssis auxiliaire (11), et
- deux autres éléments de connexion (33; 34), une extrémité (33B; 34B) de chaque élément de connexion pouvant pivoter autour d'un troisième axe de pivotement (45) parallèle aux arbres rotatifs, et l'autre extrémité (33A; 34A) de chaque connexion élément pouvant pivoter autour d'un quatrième axe de pivotement (47) parallèle aux arbres rotatifs,
**caractérisé en ce que** les arbres rotatifs sont formés par les axes de roue (9) et **en ce qu** 'une extrémité (33B; 34B) de chaque autre élément de liaison est reliée aux leviers (15) ou à l'extrémité avant (3B) du cadre de support, et l'autre extrémité (33A; 34A) de chaque autre élément de connexion est connectée au cadre auxiliaire (11).

2. Véhicule (1C) selon la revendication 1, **caractérisé en ce que** les éléments de liaison (31) et autres éléments de liaison (34) étant parallèles entre eux et restant parallèles entre eux lors du déplacement de la deuxième extrémité (15B) du les leviers (15).

3. Véhicule (1A; 1B) selon la revendication 1 ou 2, **caractérisé en ce que** le système de levage comprend un élément auxiliaire (12) qui est relié aux secondes extrémités (15B) des leviers (15) et s'étend vers le haut à partir du leviers, les moyens de déplacement (10) sur le bâti auxiliaire sont reliés à une extrémité supérieure (12A) de l'élément auxiliaire.

4. Véhicule (1A) selon la revendication 3, **caractérisé en ce que** l'élément de déplacement allongé est formé par une broche filetée (13) et les moyens de déplacement (10) comprennent en outre un élément de levage (17) qui est relié à l'extrémité supérieure de l'élément auxiliaire (12) et est pourvu d'un filetage intérieur et peut être déplacé le long de la broche filetée.

5. Véhicule (1B; 1C) selon la revendication 3, **caractérisé en ce que** l'élément de déplacement allongé est formé par un cylindre ou piston d'une combinaison cylindre-piston (14), une extrémité de chaque combinaison cylindre-piston est reliée au le cadre auxiliaire (11) et l'autre extrémité de chaque combinaison cylindre-piston sont reliés à l'extrémité supérieure de l'élément auxiliaire (12).

6. Véhicule (1A) selon la revendication 4, **caractérisé en ce que** le système de levage comprend deux guides (21) fixés sur le châssis auxiliaire (11), un de chaque côté du châssis auxiliaire, lesquels guides sont sensiblement parallèles au filetage broche (13), et **en ce que** chaque levier (15) est pourvu d'un élément de guidage (25) qui est mobile dans l'un des guides.

7. Véhicule (1A) selon la revendication 6, **caractérisé en ce que** le système de levage comprend deux autres guides (23) fixés au châssis auxiliaire (11), un de chaque côté du châssis auxiliaire, lesquels autres guides sont au moins sensiblement parallèlement et à distance des guides (21), et **en ce que** chaque levier (15) est pourvu d'un autre élément de guidage (27) qui est mobile dans l'un des autres guides.

8. Véhicule (1A; 1B; 1C) selon l'une des revendications précédentes, **caractérisé en ce qu'**un timon (5) est fixé au châssis auxiliaire (11) pour l'attelage à un véhicule tracteur.
